(19) Europäisches Patentamt / European Patent Office / Office européen des brevets

(11) **EP 4 313 737 B1**

(12) **EUROPEAN PATENT SPECIFICATION**

(45) Date of publication and mention
of the grant of the patent:
**17.12.2025 Bulletin 2025/51**

(21) Application number: **22706690.9**

(22) Date of filing: **24.02.2022**

(51) International Patent Classification (IPC):
***B62D 35/00*** *(2006.01)*

(52) Cooperative Patent Classification (CPC):
**B62D 35/001**

(86) International application number:
**PCT/IB2022/051636**

(87) International publication number:
**WO 2022/200874 (29.09.2022 Gazette 2022/39)**

(54) **PASSIVE AERODYNAMIC DEVICE FOR REDUCING THE DRAG OF GROUND VEHICLES**

PASSIVE AERODYNAMISCHE VORRICHTUNG ZUR VERRINGERUNG DES LUFTWIDERSTANDS
VON BODENFAHRZEUGEN

DISPOSITIF AÉRODYNAMIQUE PASSIF POUR RÉDUIRE LA TRAÎNÉE DE VÉHICULES
TERRESTRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2021 IT 202100007457**

(43) Date of publication of application:
**07.02.2024 Bulletin 2024/06**

(73) Proprietor: **Politecnico di Milano
20133 Milano (IT)**

(72) Inventors:
- **SCHITO, Paolo**
  **20159 Milan (IT)**
- **MOHAMMADIKALAKOO, Babak**
  **30167 Hannover (DE)**

(74) Representative: **Gregorj S.r.l.**
**Via L. Muratori, 13/b
20135 Milan (IT)**

(56) References cited:
EP-A1- 2 979 959      WO-A1-2006/060852
WO-A1-2016/083997      CA-A1- 2 698 896

## Description

### Technical field of the invention

The present invention refers to an aerodynamic device for reducing the drag of ground vehicles, such as cars or other larger sized vehicles, such as trucks, trains, or similar.

The term "drag" refers to the aerodynamic resistance which a vehicle is subjected to due to the effect of the relative speed between air and the vehicle itself during the advancement of this latter. Such drag force increases by the square of the speed of said relative speed and is proportional to a drag coefficient Cd specific to each vehicle.

The term "passive" means that the aerodynamic device does not require power sources for reducing the drag.

### Prior art

The drag force is one of the main forces contrasting the advancement of a vehicle. The greater the drag force acting on the vehicle is, the greater its fuel consumption will be. This problem is particularly felt in the field of vehicles provided with an internal combustion engine, wherein the fuel cost is substantial. Moreover, the high fuel consumption involves emissions hazardous to the environment which should be curbed.

In order to decrease the drag force and therefore the fuel consumption, it is known for example to equip vehicles with suitable aerodynamic appendages destined to reduce the drag resistance to the advancement, in other words adapted to reduce the drag coefficient of a vehicle. For example, it is known to provide lateral fairings and/or wheel fairings, because such zones and the vehicle bottom are critical from the point of view of the vortexes which are formed by the motion, which in turn cause a substantial drag.

The Applicant has filed, with reference to this matter, the international patent application WO 2016/083997, regarding an aerodynamic device having an aerodynamic appendage comprising an aerodynamic surface destined to interact with the aerodynamic flow around the vehicle and having a semi-elliptical outline. Such aerodynamic device enables a substantial reduction of the drag of ground vehicles, is of a simple construction, and consequently has a low cost, and can be directly integrated in new vehicles during their manufacture, or can be applied as an external appendage on already existing vehicles.

However, since such aerodynamic devices must be applied on external surfaces of a vehicle, they alter the general outline, with negative consequences not only on its appearance but also on the vehicle operability because the aerodynamic devices could interfere with the latter making necessary to modify the vehicle.

A further device according to the prior art is disclosed in CA 2 698 896 A1.

This document discloses in particular an aerodynamic device for reducing the drag of ground vehicles, comprising a main body having at least one lateral wall and a rear wall, and at least one conduit having an inlet opening and an outlet opening, wherein the inlet opening is flush with the front wall and the outlet opening is flush with the side wall. The inlet opening and the outlet opening feature a continuous curvilinear contour devoid of discontinuity points, and the conduit features a longitudinal development axis forming, between the inlet opening and the outlet opening, an arc devoid of discontinuity points.

### Brief summary of the invention

Therefore, the object of the present invention consists of providing a passive aerodynamic device capable of reducing the drag of a vehicle, which have a limited impact on the exterior of the same, while reducing the interference problems with other components of the vehicle itself, and also diminishing the aesthetic impact determined by the aerodynamic device.

This and other objects are met by a passive aerodynamic device for reducing the drag of ground vehicles according to claim 1.

Dependent claims define possible advantageous embodiments of the invention.

### Brief description of the figures

In order to better understand the invention and appreciate the advantages, some exemplifying non-limiting embodiments of the same will be described in the following with reference to the attached figures, in which:

Figure 1 is a perspective schematic view of an aerodynamic passive device for reducing the drag of ground vehicles according to a possible embodiment;

Figures 2a-2d are projection lateral schematic views of a conduit of the aerodynamic device in Figure 1 according to a possible embodiment;

Figure 3 is a perspective schematic view of a detail of the aerodynamic device according to a possible embodiment;

Figure 4 is a diagram showing the drag reduction as a percentage (ordinate) against the speed of air (abscissa) for aerodynamic devices according to some embodiments of the invention;

Figure 5 is a perspective schematic view of a detail of an aerodynamic device not according to the present invention;

Figure 6 schematically illustrates two lateral views of conduits of the aerodynamic device according to different embodiments of the invention;

Figures 7a-7b are lateral schematic views of a conduit of the device in Figure 1 according to further possible embodiments;

Figures 8a-8b are lateral schematic views of a conduit of the device in Figure 1 according to further possible embodiments;

Figures 9a-9c are perspective schematic views of a detail of the aerodynamic device according to further possible embodiments.

**Detailed description of the invention**

For the purpose of the present invention and attached claims, unless otherwise noted, all the numbers expressing quantities, amounts, percentages, etcetera, must be understood as modified in all the instances by the term "about". Further, all the ranges comprise any combinations of the disclosed maximum and minimum points and include any intermediate ranges inside them which could be specifically listed or not.

The present disclosure, according to at least one of said aspects, could be implemented according to one or more of the following embodiments, optionally combined with each other.

For the objects of the present description and attached claims, the terms "a" or "an" should be read as comprising one or at least one and the singular comprises also the plural, unless the context clearly indicates otherwise. This is only made for convenience and to provide the disclosure with a general meaning.

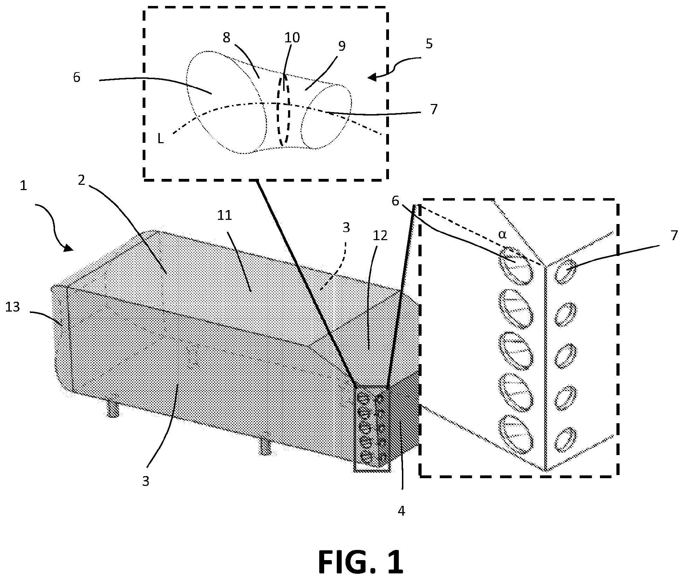

With reference to the attached Figure 1, an aerodynamic device for reducing the drag of ground vehicles is indicated by reference 1. The device 1 is destined to be applied to an existing vehicle or can be integrated in the same when manufacturing it. For example, the device 1 can be applied or integrated in a car, as will be explained in the following. Obviously, the device 1, according to the invention, can be applied or integrated also in ground vehicles of different types, such as, for example, trucks, vans, railroad cars or locomotives.

The device 1 comprises a main body 2 having at least one lateral wall 3 and one rear wall 4. Referring to the conditions of use of the device 1, the lateral wall 3 is destined to be tangentially swept by the aerodynamic flow enveloping the vehicle during its motion (high pressure zone), while the rear wall 4 is destined to be positioned in the trail zone (low pressure zone). With reference to the main body 2, depending on the use and position of the same in the vehicle, it can be configured in different ways. In the attached figures, the main body is outlined, only in an exemplifying way, as an Ahmed body having two lateral walls 3 and a rear wall 4. The Ahmed body also includes an upper wall 11 (which joins together the two opposite lateral walls 3 on the top), a sloped wall 12 (which joins the upper wall 11 and rear wall 4 and forms with the upper wall 11 an angle $\alpha$) and a front wall 13. As it is known, the Ahmed body is a reference body for the aerodynamic research about vehicles.

Obviously, the main body 2 of the device 1 according to the invention could have shapes different from the one of the Ahmed body and not necessarily two lateral walls exposed to the lateral aerodynamic flow (for example: in conditions of use only the lateral wall 3 could be present).

If the device 1 is distinct from and connectable to the vehicle, it can comprise suitable connecting means for stably or removably coupling the device to the vehicle. On the contrary, if the device 1 is integrated in the vehicle itself, such connecting means are not required, or possible connecting means, already present in the component which the device 1 is integrated in, can be used.

The aerodynamic device 1 comprises at least one conduit 5 having an inlet opening 6 formed at the lateral wall 3 and an outlet opening 7 formed at the rear wall 4. Advantageously, the conduit 5 develops completely inside the main body 2. Possibly, the aerodynamic device 1 can comprise a plurality of conduits 5, for example overlapped on each other, preferably aligned (in other words the centers of the respective inlet/outlet openings are arranged along a same line), each having an inlet opening 6 at the lateral wall 3 and an outlet opening 7 at the rear wall 4. If the main body 2 comprises two opposite lateral walls 3, the device 1 can comprise one or more of said conduits 5 connecting one of the lateral walls 3 to the rear wall 4 in each of these opposite lateral walls 4.

With reference to the single conduit 5, preferably the inlet opening 6 is flush with the lateral wall 3 and, still more preferably, the outlet opening 7 is flush with the rear wall 4.

The inlet 6 and outlet openings 7, and also the conduit 5 connecting them, have specifically designed outlines for reducing the vehicle drag, according to what will be described in the following.

The inlet 6 and outlet openings 7 have a curvilinear continuous contour devoid of discontinuity points, in other words, devoid of corners. Indeed, it was observed that corners contribute to the generation of turbulent flows in the conduit, with a consequent drag increase. Preferably, they have the same shape. According to a possible embodiment, the inlet 6 and outlet openings 7 have a generally convex contour, in other words devoid of concavities, having a constant or varying curve radius. For example, the inlet 6 and outlet openings 7 can have circular or elliptical shaped contours (or substantially elliptical, in other words contours shaped as a curve different from the ellipse, but approximating its shape, for example a polynomial curve having suitable coefficients). If the inlet 6 and outlet openings 7 are not circular, for example are elliptical, having a greater radius and a smaller radius, the main axis of the elliptical contour of the inlet opening is preferably oriented in a transversal direction, still more preferably perpendicular, to the advancement direction of the vehicle on which the device 1 itself is mounted/is destined to be mounted. In other words, the main axis of the elliptical contours of the inlet and/or outlet openings is preferably non-horizontal, with reference to the normal conditions of use of the device 1.

According to an embodiment, the inlet 6 and outlet 7 openings lie in planes transversally oriented to each other, preferably perpendicularly. Therefore, the conduit 5 has generally a curved trend, in other words its longitudinal development axis L, connecting the inlet opening 6 to the outlet opening 7, is in the shape of an arc.

Advantageously, the arc formed by said longitudinal development axis L of the conduit 5 is continuous and devoid of discontinuity points and its curve radius is constant or varying. Preferably, such arc is devoid of inflections, in other words of points in which there is a change of concavity (in other words a convex segment does not become concave or viceversa).

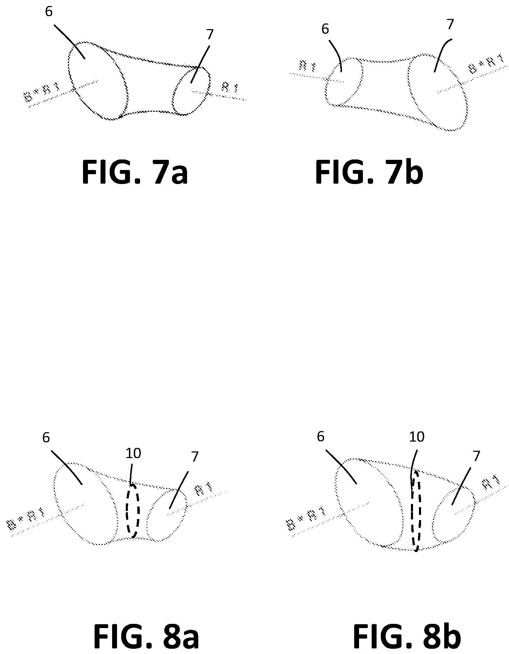

Preferably, the inlet opening 6 area is greater than the outlet opening 7 area. However, according to an alternative variant, the inlet opening 6 area can be smaller than the outlet opening 7 area (on this matter, see Figure 7b, for example).

According to an embodiment, the conduit 5 comprises a first segment 8 connecting the inlet opening 6 to an intermediate section 10 of the conduit, and a second segment 9 connecting said intermediate section 10 to the outlet opening 7. Such intermediate section 10 is preferably arranged at the midpoint of the longitudinal development axis L of the conduit or in proximity of it. Preferably, in the cross-section transversal to the longitudinal development axis L of the conduit, the intermediate section 10 corresponds to the section of the conduit having the minimum area, less than the area of the inlet opening 6 and also than the outlet opening area 7. According to such variant, the first segment of the conduit 8 preferably has in a cross-section an area gradually decreasing from the inlet opening 6 to the intermediate section 10, and gradually increasing from the intermediate section 10 to the outlet opening 7.

According to an alternative embodiment, the intermediate section 10 corresponds to the section of the conduit having the largest area, greater than the area of the inlet opening 6 and also than the outlet opening 7 (on this matter see Figure 8b, for example). In this case, preferably, the first segment of the conduit 8 has an area of the cross-section gradually increasing from the inlet opening 6 to the intermediate section 10, and gradually decreasing from the intermediate section 10 to the outlet opening 7.

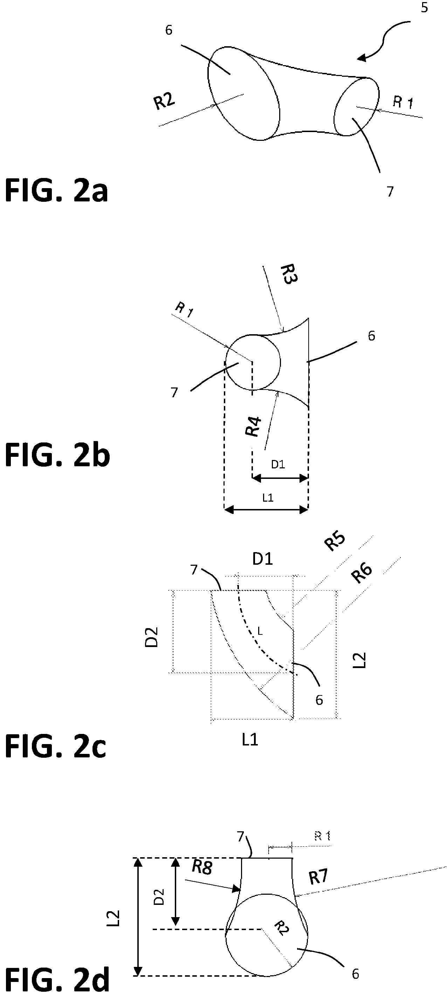

Figures 2a-2d illustrate four different views of the conduit 5 according to a possible embodiment, in which the inlet and outlet openings 6, 7 have a circular contour and lie on planes perpendicular to each other. Moreover, Figures 2a-2d show parameters geometrically defining the conduit 5.

Figure 2a is an axonometric view of such conduit. The outlet opening 7 has a radius R1, in this case a constant radius, since the outline is circular. If the outline of the outlet opening is not circular, R1 is half the maximum size of the contour of the outlet opening 7. For example, if the outlet opening has an elliptical contour, R1 is half the main axis of the ellipse. The inlet opening 6 has in turn a radius R2, in this case constant, the exemplifying outline being circular, given by the relationship:

$$R2 = B*R1$$

wherein B is a parameter comprised between 0.5 and 2, preferably comprised between 0.625 and 2, still more preferably comprised between 1 and 2, still more preferably comprised between 1 and 1.6, for example equal to 1.6.

Analogously to R1, if the contour of the inlet opening 6 is not circular, R2 is half the maximum size of the contour of the inlet opening 6. For example, if the inlet opening 6 has an elliptical contour, R2 is half the main axis of the ellipse.

Figure 2b is a projection view of the conduit 5 on a plane in which the outlet opening 7 lies. Given the different dimensions of the inlet 6 and outlet 7 openings, the projection of the outline of the conduit 5 on such plane defines two opposite arcs having radius curves R3 and R4, respectively. With reference to normal conditions of use of the device 1, the arc having radius R3 is on the upper side, while the arc having radius R4 is on the bottom side. Such radiuses R3 and R4 are defined with respect to R1 by the following relationships:

-

$$R3 = A*R1$$

-

$$R4 = C*R1$$

wherein:

- A is a parameter comprised between 2 and 6.5;
- C is a parameter comprised between 2 and 6.5.

Preferably, such radiuses R3 and R4 are equal to each other (in other words, A = B). They can be constant (consequently A and/or B are constant) or can be variables (consequently A and/or B are variables inside the above defined values).

According to the illustrated embodiment, the arcs having radiuses R3 and R4 are concave (corresponding to the minimum area condition for the intermediate section 10), but, according to an alternative embodiment (corresponding to the intermediate section 10 having maximum area) they can be convex.

The area of the intermediate section is obviously dependent on the radius R3 and R4.

The projection of the contour of the conduit 5 on said plane which the outlet opening 7 lies on, further defines:

- a first width of the conduit L1 given by the relationship L1 = F*R1, wherein F is a parameter comprised between 3 and 6;
- a distance D1 between the center of the outlet opening 7 and the plane which the inlet opening 6 lies on, given by the relationship D1 = D*R1, wherein D is a parameter comprised between 1.5 and 5.

Figure 2c shows a projection view of the conduit 5 on a plane which the curvilinear longitudinal development axis L of the conduit 5 lies on.

Due to the different dimensions of the inlet 6 and outlet 7 openings, the projection of the contour of the conduit 5 on such plane defines two opposite arcs, one radially internal (concave in the example in the figure) and one radially external (convex), having curve radiuses R5 and R6, respectively. Such radiuses R5 and R6 are defined with respect to the radius R1 by the following relationships:

$$R5 = O*R1$$

$$R6 = P*R1$$

wherein:

- O is a parameter comprised between 1.5 and 4;
- P is a parameter comprised between 4.5 and 7.

Such radiuses R5 and R6 can be constant (consequently O and/or P are constant) or can be varying (consequently O and/or P are varying inside the above defined values).

Lastly, Figure 2d shows a projection view of the conduit 5 on a plane which the inlet opening 6 lies on. Due to the different dimensions of the inlet 6 and the outlet 7 openings, the projection of the contour of the conduit 5 on such plane defines two opposite arcs, preferably concave, having curve radiuses R7 and R8, respectively. Preferably, such radiuses R7 and R8 are equal to each other and are defined with respect to R1 by the following relationships:

$$R7 = H*R1$$

$$R8 = Q*R1$$

wherein:

- H is a parameter comprised between 2.5 and 8.5;
- Q is a parameter comprised between 2.5 and 8.5.

Preferably, such radiuses R7 and R8 are equal to each other (in other words: H = Q). They can be constant (consequently H and/or Q are constant) or can be varying (consequently H and/or Q can vary inside the above defined values).

The projection of the contour of the conduit 5 on said plane which the inlet opening 6 lies on, further defines:

- a second width of the conduit L2 provided by the relationship L2 = G*R1, wherein G is a parameter comprised between 4.1 and 5.6;
- a distance D2 between the center of the inlet opening 6 and the plane which the outlet opening 7 lies on, provided by the relationship D2 = E*R1, wherein E is a parameter comprised between 3 and 4.

The device 1 can comprise one or more conduits 5 connecting one of the lateral walls 3 to the rear wall 4. The distances between said conduits and/or their position/orientation in the device 1 can be also defined by one or more of the following further quantities parametrized with respect to R1.

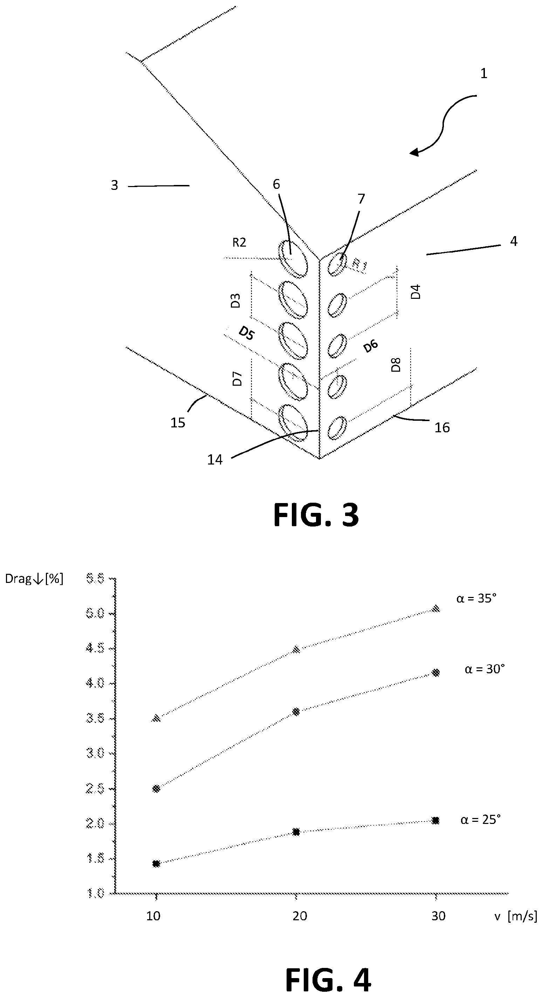

Referring to Figure 3, it illustrates an exemplifying embodiment wherein the device 1 comprises five conduits arranged along all the height of the lateral wall 3. It shows the following quantities:

- distance between the centers of the inlet openings 6 of two following conduits D3 = N*R1, wherein N is a parameter less than or equal to 4;
- distance between the centers of the outlet openings 7 of two following conduits D4 = I*R1, wherein I is a parameter less than or equal to 4;
- distance between the center of the inlet opening 6 of a conduit and the edge 14 which divides the lateral wall 3 and rear wall 4, D5 = M*R1, wherein M is a parameter comprised between 3 and 4;
- distance between the center of the outlet opening 7 of a conduit and the edge 14 which divides the lateral wall 3 and the rear wall 4, D6 = K*R1, wherein K is a parameter comprised between 2 and 5;
- distance between the center of the inlet opening 6 of the conduit in the lowest position and the lower edge 15 of the lateral wall 3, D7 = L*R1, in which L is a parameter less than or equal to 2;
- distance between the center of the outlet opening 7 of the conduit in the lowest position and the lower edge 16 of the rear wall 4, D8 = J*R1, wherein J is a parameter less than or equal to 2.

Tests performed on the device according to the invention demonstrate that when the device is applied on a vehicle, it enables to reduce the drag coefficient. The main effect obtained consists in an increase of the pressure in the trail zone of the vehicle, which reduces the size of the trail itself.

The following shows the results of some comparative numeral tests performed for evaluating which are the geometries, and also the number of the conduits which enable to obtain the greatest reductions of the drag coefficients.

**Comparative test 1**

First of all, the Applicant has numerically tested a device of the type illustrated in Figure 3, provided with five circular conduits, in an Ahmed body having different angles of the sloped wall 12 ($\alpha$ being respectively equal to 25°, 30°, 35°) in air flows respectively at speeds of 10, 20 and 30 m/s. The results of such tests are listed in the diagram of Figure 4, wherein the abscissa represents the speed v in m/s and the ordinate represents the reduction by % of the drag (Drag $\downarrow$) with respect to a case in which the same Ahmed body is not provided with the conduits.

The results show a drag reduction comprised about between 2% and 5%, wherein the major reduction, equal to 5.07% is obtained by an angle $\alpha$ equal to 35° at a speed of 30 m/s.

**Comparative test 2**

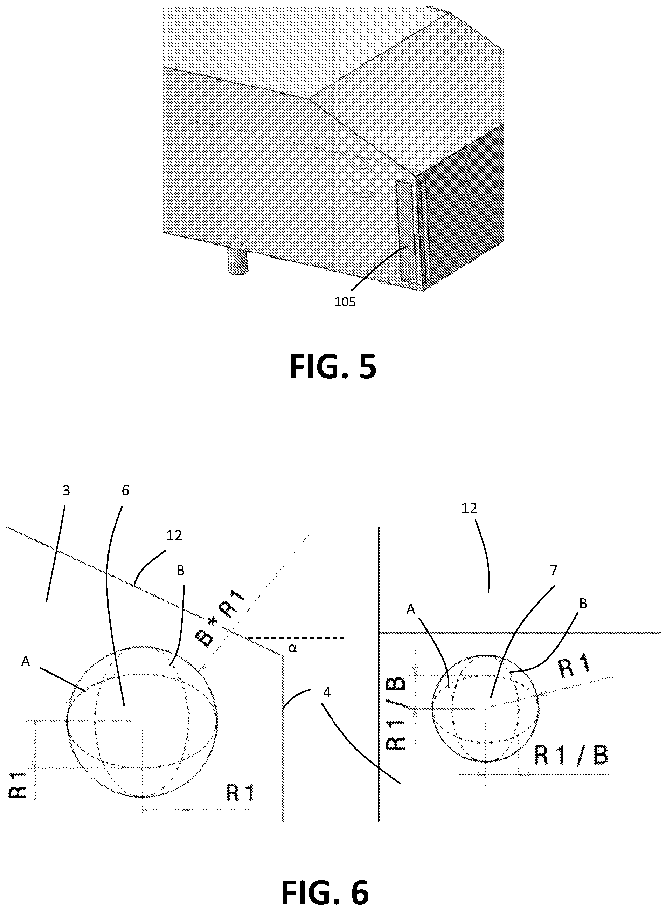

Moreover, the Applicant has compared a device of a type illustrated in Figure 3, provided with five circular conduits, in an Ahmed body having an angle of the sloped wall $\alpha$ equal to 35° in an air flow defined by a Reynolds number Re = 2.85 x $10^6$, with an Ahmed body having just one rectangular cross-section conduit 105, of the type illustrated in Figure 5 (and not being part of the present invention). With reference to this latter, a drag coefficient Cd equal to 0.284 was calculated, while for the device according to the invention, the estimated drag coefficient Cd is equal to 0.276. Such test has shown that the presence of corners in the conduits is undesirable since it generates a pressure drag increase because it is a separation source.

**Comparative test 3**

With reference to Figure 6, a comparative numeral test was performed among three Ahmed bodies with a sloped wall 12 having an angle $\alpha$ equal to 35° immersed in an air flow at the speed of 20 m/s.

In the first case, the Ahmed body is devoid of the conduits 5, in the second case the Ahmed body has a single elliptical cross-section conduit wherein the ellipse is inscribed in a circle and has a main horizontal axis (curve A), in the second case the Ahmed body has a single conduit having an elliptical cross-section having the same shape wherein the ellipse is instead inscribed in a circle having the same dimensions of the second case and has a vertical main axis (curve B). The dimensions are parametrized based on the previously defined parameter B with respect to the radius R1 of the circle which the ellipse is inscribed in at the outlet opening, according to what is shown in Figure 4.

The drag coefficients Cd determined for the three cases are the following:

Cd without conduit = 0.2981;
Cd with a horizontal elliptical conduit: 0.3078;
Cd with a vertical elliptical conduit: 0.296.

As it is shown, there is a drag decrease for the vertical elliptical conduit, even if lower than the one in the circular conduit, and even a substantial drag worsening is detected in case of a completely horizontal ellipse, at least with this geometry and these proportions among the dimensions.

**Comparative test 4**

With reference to Figures 7a and 7b, a numeral comparative test was performed between two Ahmed bodies with a sloped wall 12 having an angle $\alpha$ equal to 35° immersed in an air flow at a speed of 20 m/s, wherein in the first case the area of the inlet opening 6 is greater than the area of the outlet opening 7 (Figure 7a), and in the second case the area of the inlet opening 6 is less than the area of the outlet opening 7 (Figure 7b). In the two examples, the areas of the inlet and outlet openings are exchanged.

By the tests it was found that, even though both the variants ensure a drag coefficient reduction, the solution in Figure 7a ensures a drag coefficient equal to 0.2815, while the solution in Figure 7b ensures a drag coefficient equal to 0.28649.

**Comparative test 5**

With reference to Figures 8a and 8b, a numeral comparative test was performed for the same conditions and for the same area of the inlet opening 6 and outlet opening 7, wherein in the first case the area of the intermediate section 10 is the lowest of the whole conduit (Figure 8a), and in the second case the area of the intermediate section 10 is the greatest of the whole conduit (Figure 8b). From the tests it was found that, even though both the variants ensure a reduction of the drag coefficient, the solution of Figure 8a ensures a drag coefficient equal to 0.28792, while the solution in Figure 8b ensures a drag coefficient equal to 0.2895.

**Comparative test 6**

Moreover, the Applicant has studied the effect of the number of conduits on the drag reduction. Particularly, the Applicant has compared a device of a type shown in Figure 3, provided with five circular overlapped aligned conduits, in an Ahmed body having an angle of the sloped wall $\alpha$ equal to 35° in an air flow defined by a Reynolds number Re = 2.85 x $10^6$, with an Ahmed body having the same shape but with four conduits, whose centers are positioned in the same positions in the two bodies for the same total surface of the inlet and outlet openings.

With respect to the drag coefficient Cd equal to 0.276 for the five conduits body, the four conduits body shows a slightly higher drag coefficient equal to 0.279.

**Comparative test 7**

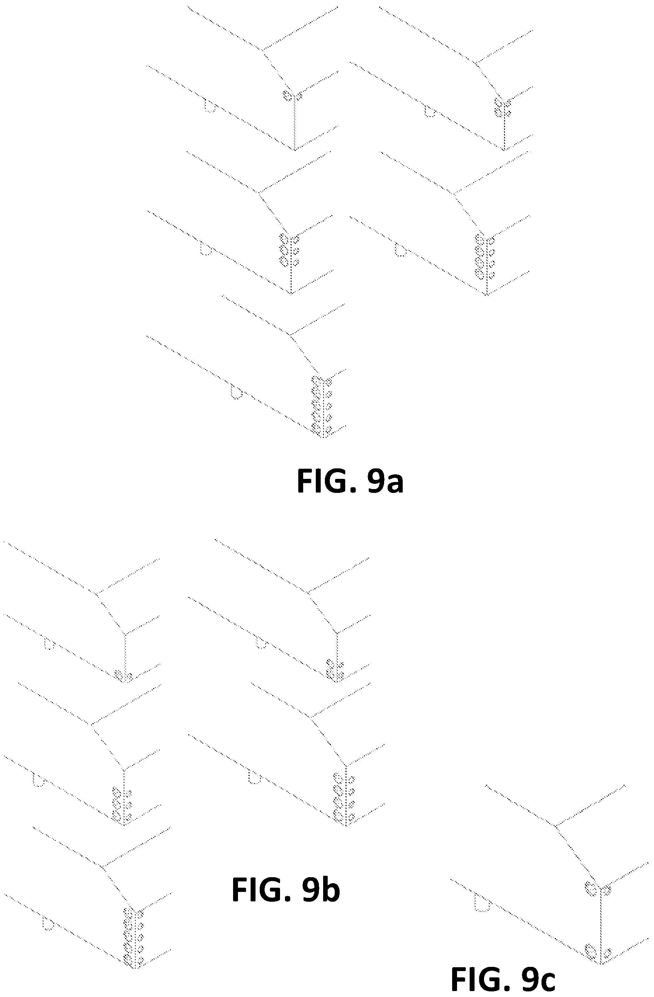

With reference to the Figures 9a, 9b, and 9c, the Applicant has also verified the combined impact on the drag reduction of the number and position of the circular cross-section conduits. The tests were again performed in an Ahmed body having an angle of the sloped wall $\alpha$ equal to 35° in an air flow defined by a Reynolds number Re = 2.85 x $10^6$.

Figure 9a shows examples with one, two, three, four and five conduits, wherein the conduits are successively arranged from the upper side of the lateral wall. The example with five conduits corresponds to the case in Figure 3, wherein the conduits are overlapped and aligned along all the height of the lateral wall.

Figure 9b shows examples with one, two, three, four and five conduits, wherein the conduits are successively arranged from the lower side of the lateral wall. The example with five conduits corresponds again to the case in Figure 3.

Lastly, Figure 9c shows an example with two conduits, wherein these two conduits are respectively arranged on the upper side and lower side of the lateral wall and are spaced apart from each other. According to this embodiment, falling in the present invention, the parameter N is greater than 4.

The following lists the drag coefficients in the shown cases.

|  | 1 conduit | 2 conduits | 3 conduits | 4 conduits | 5 conduits |
|---|---|---|---|---|---|
| Example of Fig. 9a | 0.29145 | 0.2889 | 0.28925 | 0.2908 | 0.2815 |
| Example of Fig. 9b | 0.2887 | 0.28838 | 0.28667 | 0.28404 | 0.2815 |
| Example of Fig. 9c |  | 0.2866 |  |  |  |

From the tests it was found that the configuration ensuring the smallest drag coefficient is the one with five conduits and that the configurations in Figure 9b are better than the configurations in Figure 9a.

The configuration with two opposite and spaced conduits in Figure 9c is more advantageous than the solutions with two close conduits in Figures 9a and 9b, and also than some solutions with a greater number of conduits. Therefore, such solution can find an application when the available space is small.

The aerodynamic device according to what was hereinbefore described can be advantageously integrated in existing components of a vehicle. For example, the main body 2 of the aerodynamic device according to the invention can be implemented by a rear light of a vehicle, for example of a car, whose interior can contain one or more conduits. In this case, it is possible to integrate two opposite aerodynamic devices according to the invention in the two rear lights of the vehicle.

According to a further embodiment, the device according to the invention can be integrated in a rear bumper of a vehicle, for example on both sides of the same.

The drag reduction of a vehicle results in less fuel consumption and therefore also in less pollution. The device according to the invention can find an application not only in vehicles which burn fossil fuels, for which it is possible to reduce the consumption, but also in electric or hybrid vehicles, for which it is possible to increase the range.

The device according to the invention also enables, all the other conditions being equal, to increase the maximum reachable speed of the vehicle and therefore can be advantageously used in race vehicles.

A person skilled in the art, in order to meet specific contingent needs could introduce many additions and modifications of elements to the described embodiments of the aerodynamic passive device for reducing the drag of ground vehicles according to the invention, as long as they fall under the scope of the attached claims.

**Claims**

1.  Aerodynamic device (1) for reducing the drag of ground vehicles, comprising:

    - a main body (2) having at least one lateral wall (3) and a rear wall (4);
    - at least one conduit (5) having an inlet opening (6) formed at the lateral wall (3) and an outlet opening (7) formed at the rear wall (4), wherein the inlet opening (6) and the outlet opening (7) feature a continuous curvilinear contour devoid of discontinuity points, and wherein the conduit (5) features a longitudinal development axis (L) forming, between the inlet opening (6) and the outlet opening (7), an arc devoid of discontinuity points,
    wherein the conduit (5) is defined by the following relationships:

    -

$$R2 = B*R1$$

    -

$$R2 = B*R1$$

    -
    -

$$R4 = C*R1$$

wherein:

- R1 is half the maximum size of the contour of the outlet opening (7);
- R2 is half the maximum size of the contour of the inlet opening (6);
- R3 is the curve radius of the projection of a first side of the conduit (5) on a plane on which the outlet opening (7) lies;
- R4 is the curve radius of the projection of a second side of the conduit (5) opposite to the first side on the plane on which the outlet opening (7) lies;
- B is a parameter comprised between 0.5 and 2;
- A is a parameter comprised between 2 and 6.5;
- C is a parameter comprised between 2 and 6.5.

2. Aerodynamic device (1) according to claim 1, wherein the parameter B is comprised between 0.625 and 2, preferably is comprised between 1 and 2, still more preferably is comprised between 1 and 1.6, for example is equal to 1.6, and/or wherein the parameters A and C are equal to each other.

3. Aerodynamic device (1) according to claim 1 or 2, wherein said projections of the first and second sides of the conduit (5) on the plane on which the outlet opening (7) lies form concave arcs having a constant or varying radius.

4. Aerodynamic device (1) according to any of the preceding claims, wherein the conduit (5) is further defined by at least one of the following relationships:

-

$$L1 = F*R1$$

-

$$D1 = D*R1$$

wherein:

- L1 is a first width of the projection of the conduit on the plane on which the outlet opening (7) lies;
- D1 is the distance between the center of the outlet opening (7) and the plane on which the inlet opening (6) lies;
- F is a parameter comprised between 3 and 6;
- D is a parameter comprised between 1.5 and 5,
and/or wherein the conduit (5) is further defined by at least one of the following

$$R5 = O*R1$$

relationships:

-

$$R5 = O*R1$$

-

$$R6 = P*R1$$

wherein:

- R5 is the curve arc of the radially inner projection of the conduit (5) on a plane on which the longitudinal development axis (L) of the conduit (5) lies;
- R6 is the curve arc of the radially outer projection of the conduit (5) on the plane on which the longitudinal development axis (L) of the conduit (5) lies;
- O is a parameter comprised between 1.5 and 4;
- P is a parameter comprised between 4.5 and 7,

and/or wherein the conduit (5) is further defined by at least one of the following relationships:

-

$$R7 = H*R1$$

-

$$R8 = Q*R1$$

.   .

wherein:

- R7 is the curve radius of the projection of a third side of the conduit (5) on a plane on which the inlet opening (6) lies;
- R8 is the curve radius of the projection of a fourth side of the conduit (5) opposite to the third side on the plane on which the inlet opening (6) lies;
- H is a parameter comprised between 2.5 and 8.5;
- Q is a parameter comprised between 2.5 and 8.5,

wherein the parameters H and Q are preferably equal to each other.

5. Aerodynamic device (1) according to the preceding claim, wherein said projections of the third and fourth sides of the conduit (5) on the plane on which the inlet opening (6) lies, form concave arcs having a constant or varying radius.

6. Aerodynamic device (1) according to anyone of the preceding claims, wherein the conduit (5) is further defined by at least one of the following relationships:

-

$$L2 = G*R1$$

-

$$D2 = E*R1$$

wherein:

- L2 is a second width of the projection of the conduit on the plane on which the inlet opening (6) lies;
- D2 is the distance between the center of the inlet opening (6) and the plane on which the outlet opening (7) lies;
- G is a parameter comprised between 4.1 and 5.6;
- E is a parameter comprised between 3 and 4.

7. Aerodynamic device (1) according to any of the preceding claims, wherein the inlet opening (6) is flush with the lateral wall (3) and/or the outlet opening (7) is flush with the rear wall (4).

8. Aerodynamic device (1) according to any of the preceding claims, wherein the inlet opening (6) and outlet opening (7) of the same conduit (5) feature contours having the same shape, and/or have a generally convex contour having a constant or varying curve radius, and/or have a circular shape contour, or an elliptical or substantially elliptical shape having a non-horizontal longest axis of the ellipse.

9. Aerodynamic device (1) according to any of the preceding claims, wherein the inlet opening (6) and outlet opening (7) lie on planes transversally oriented to each other.

10. Aerodynamic device (1) according to any of the preceding claims, wherein the area of the inlet opening (6) is greater than the area of the outlet opening (7), or the area of the inlet opening (6) is smaller than the area of the outlet opening (7).

11. Aerodynamic device (1) according to any of the preceding claims, wherein the longitudinal development axis (L) of the conduit (5) is devoid of inflections.

12. Aerodynamic device (1) according to any of the preceding claims, wherein the conduit (5) comprises a first segment (8) connecting the inlet opening (6) to an intermediate section (10) of the conduit, and a second segment (9) connecting said intermediate section (10) to the outlet opening (7), wherein the intermediate section (10) corresponds to the cross-section of the conduit having the minimum or maximum area.

13. Aerodynamic device (1) according to any of the preceding claims, comprising a plurality of overlapped aligned conduits (5), wherein the position of said plurality of overlapped conduits (5) in the main body (2) is defined by one or more of the following relationships:

   - 

$$D3 = N*R1$$

   - 

$$D4 = I*R1$$

   - 

$$D5 = M*R1$$

   - 

$$D6 = K*R1$$

   - 

$$D7 = L*R1$$

   - 

$$D8 = J*R1$$

wherein:

   - D3 is the distance between the centers of the inlet openings (6) of two following conduits;
   - N is a parameter less than or equal to 4;
   - D4 is the distance between the centers of the outlet openings (7) of two following conduits;
   - I is a parameter less than or equal to 4;
   - D5 is the distance between the center of the inlet opening (6) of a conduit and the edge separating the lateral wall (3) and rear wall (4) of the main body (2);

- M is a parameter comprised between 3 and 4;
- D6 is the distance between the center of the outlet opening (7) of a conduit and the edge separating the lateral wall (3) and rear wall (4);
- K is a parameter comprised between 2 and 5;
- D7 is the distance between the center of the inlet opening (6) of the conduit in the lowest position and the lower edge of the lateral wall (3);
- L is a parameter less than or equal to 2;
- D8 is the distance between the center of the outlet opening (7) of the conduit in the lowest position and the lower edge of the rear wall (4);
- J is a parameter less than or equal to 2.

14. Ground vehicle comprising at least one aerodynamic device (1) for reducing the drag according to any of the preceding claims.

15. Ground vehicle according to the preceding claim, wherein said at least one aerodynamic device (1) is incorporated in a rear light or in a rear bumper of said ground vehicle.


**Patentansprüche**

1. Aerodynamische Vorrichtung (1) zum Reduzieren des Luftwiderstands von Bodenfahrzeugen, umfassend:

   - einen Hauptkörper (2), der mindestens eine Seitenwand (3) und eine Rückwand (4) aufweist;
   - mindestens eine Leitung (5), die eine an der Seitenwand (3) gebildete Einlassöffnung (6) und eine an der Rückwand (4) gebildete Auslassöffnung (7) aufweist, wobei die Einlassöffnung (6) und die Auslassöffnung (7) eine kontinuierliche, gekrümmte Kontur ohne Diskontinuitätspunkte besitzen und wobei die Leitung (5) eine Längsentwicklungsachse (L) besitzt, die zwischen der Einlassöffnung (6) und der Auslassöffnung (7) einen Bogen ohne Diskontinuitätspunkte bildet,

   wobei die Leitung (5) durch die folgenden Beziehungen definiert ist:

   -
   $$R2 = B*R1$$

   -
   $$R3 = A*R1$$

   -
   $$R4 = C*R1$$

   wobei:

   - R1 die Hälfte der maximalen Größe der Kontur der Auslassöffnung (7) ist;
   - R2 die Hälfte der maximalen Größe der Kontur der Einlassöffnung (6) ist;
   - R3 der Kurvenradius der Projektion einer ersten Seite der Leitung (5) auf eine Ebene ist, auf der die Auslassöffnung (7) liegt;
   - R4 der Kurvenradius der Projektion einer zweiten Seite der Leitung (5) gegenüber der ersten Seite auf die Ebene ist, auf der die Auslassöffnung (7) liegt;
   - B ein Parameter zwischen 0,5 und 2 ist;
   - A ein Parameter zwischen 2 und 6,5 ist;
   - C ein Parameter zwischen 2 und 6,5 ist.

2. Aerodynamische Vorrichtung (1) nach Anspruch 1, wobei der Parameter B zwischen 0,625 und 2 liegt, vorzugsweise zwischen 1 und 2 liegt, noch bevorzugter zwischen 1 und 1,6 liegt, beispielsweise gleich 1,6 ist, und/oder wobei die Parameter A und C gleich sind.

3. Aerodynamische Vorrichtung (1) nach Anspruch 1 oder 2, wobei die Projektionen der ersten und der zweiten Seite der Leitung (5) auf die Ebene, auf der die Auslassöffnung (7) liegt, konkave Bögen bilden, die einen konstanten oder variierenden Radius aufweisen.

4. Aerodynamische Vorrichtung (1) nach einem der vorstehenden Ansprüche, wobei die Leitung (5) ferner durch mindestens eine der folgenden Beziehungen definiert ist:

-

$$L1 = F*R1$$

-

$$D1 = D*R1$$

wobei:

- L1 eine erste Breite der Projektion der Leitung auf die Ebene ist, auf der die Auslassöffnung (7) liegt;
- D1 der Abstand zwischen dem Mittelpunkt der Auslassöffnung (7) und der Ebene ist, auf der die Einlassöffnung (6) liegt;
- F ein Parameter zwischen 3 und 6 ist;
- D ein Parameter zwischen 1,5 und 5 ist,

und/oder wobei die Leitung (5) ferner durch mindestens eine der folgenden Beziehungen definiert ist:

-

$$R5 = O*R1$$

-

$$R6 = P*R1$$

wobei:

- R5 der Kurvenbogen der radial inneren Projektion der Leitung (5) auf eine Ebene ist, auf der die Längsentwicklungsachse (L) der Leitung (5) liegt;
- R6 der Kurvenbogen der radial äußeren Projektion der Leitung (5) auf die Ebene ist, auf der die Längsentwicklungsachse (L) der Leitung (5) liegt;
- O ein Parameter zwischen 1,5 und 4 ist;
- P ein Parameter zwischen 4,5 und 7 ist,

und/oder wobei die Leitung (5) ferner durch mindestens eine der folgenden Beziehungen definiert ist:

-

$$R7 = H*R1$$

-

$$R8 = Q*R1$$

wobei:

- R7 der Kurvenradius der Projektion einer dritten Seite der Leitung (5) auf eine Ebene ist, auf der die Einlassöffnung (6) liegt;
- R8 der Kurvenradius der Projektion einer vierten Seite der Leitung (5) gegenüber der dritten Seite auf die Ebene ist, auf der die Einlassöffnung (6) liegt;
- H ein Parameter zwischen 2,5 und 8,5 ist;
- Q ein Parameter zwischen 2,5 und 8,5 ist,

wobei die Parameter H und Q vorzugsweise gleich sind.

5. Aerodynamische Vorrichtung (1) nach dem vorstehenden Anspruch, wobei die Projektionen der dritten und der vierten Seite der Leitung (5) auf die Ebene, auf der die Einlassöffnung (6) liegt, konkave Bögen bilden, die einen konstanten oder variierenden Radius aufweisen.

6. Aerodynamische Vorrichtung (1) nach einem der vorstehenden Ansprüche, wobei die Leitung (5) ferner durch mindestens eine der folgenden Beziehungen definiert ist:

-

$$L2 = G*R1$$

-

$$D2 = E*R1$$

wobei:

- L2 eine zweite Breite der Projektion der Leitung auf die Ebene ist, auf der die Einlassöffnung (6) liegt;
- D2 der Abstand zwischen dem Mittelpunkt der Einlassöffnung (6) und der Ebene ist, auf der die Auslassöffnung (7) liegt;
- G ein Parameter zwischen 4,1 und 5,6 ist;
- E ein Parameter zwischen 3 und 4 ist.

7. Aerodynamische Vorrichtung (1) nach einem der vorstehenden Ansprüche, wobei die Einlassöffnung (6) bündig mit der Seitenwand (3) ist und/oder die Auslassöffnung (7) bündig mit der Rückwand (4) ist.

8. Aerodynamische Vorrichtung (1) nach einem der vorstehenden Ansprüche, wobei die Einlassöffnung (6) und die Auslassöffnung (7) derselben Leitung (5) Konturen besitzen, die die gleiche Form aufweisen, und/oder eine im Allgemeinen konvexe Kontur aufweisen, die einen konstanten oder variierenden Kurvenradius aufweist, und/oder eine kreisförmige Kontur oder eine elliptische oder im Wesentlichen elliptische Form aufweisen, die eine nicht horizontale längste Achse der Ellipse aufweist.

9. Aerodynamische Vorrichtung (1) nach einem der vorstehenden Ansprüche, wobei die Einlassöffnung (6) und die Auslassöffnung (7) auf quer zueinander ausgerichteten Ebenen liegen.

10. Aerodynamische Vorrichtung (1) nach einem der vorstehenden Ansprüche, wobei die Fläche der Einlassöffnung (6) größer ist als die Fläche der Auslassöffnung (7) oder die Fläche der Einlassöffnung (6) kleiner ist als die Fläche der Auslassöffnung (7).

11. Aerodynamische Vorrichtung (1) nach einem der vorstehenden Ansprüche, wobei die Längsentwicklungsachse (L) der Leitung (5) frei von Biegungen ist.

12. Aerodynamische Vorrichtung (1) nach einem der vorstehenden Ansprüche, wobei die Leitung (5) ein erstes Segment (8), das die Einlassöffnung (6) mit einem Zwischenabschnitt (10) der Leitung verbindet, und ein zweites Segment (9) umfasst, das den Zwischenabschnitt (10) mit der Auslassöffnung (7) verbindet, wobei der Zwischenabschnitt (10) dem Querschnitt der Leitung entspricht, der die minimale oder maximale Fläche aufweist.

13. Aerodynamische Vorrichtung (1) nach einem der vorstehenden Ansprüche, umfassend eine Vielzahl von überlappenden, ausgerichteten Leitungen (5), wobei die Position der Vielzahl von überlappenden Leitungen (5) in dem Hauptkörper (2) durch eine oder mehrere der folgenden Beziehungen definiert ist:

-

$$D3 = N*R1$$

-

$$D4 = I*R1$$

-

$$D5 = M*R1$$

-

$$D6 = K*R1$$

-

$$D7 = L*R1$$

-

$$D8 = J*R1$$

wobei:

- D3 der Abstand zwischen den Mittelpunkten der Einlassöffnungen (6) von zwei aufeinanderfolgenden Leitungen ist;
- N ein Parameter kleiner oder gleich 4 ist;
- D4 der Abstand zwischen den Mittelpunkten der Auslassöffnungen (7) von zwei aufeinanderfolgenden Leitungen ist;
- I ein Parameter kleiner oder gleich 4 ist;
- D5 der Abstand zwischen dem Mittelpunkt der Einlassöffnung (6) einer Leitung und der Kante ist, die die Seitenwand (3) und die Rückwand (4) des Hauptkörpers (2) trennt;
- M ein Parameter zwischen 3 und 4 ist;
- D6 der Abstand zwischen dem Mittelpunkt der Auslassöffnung (7) einer Leitung und der Kante ist, die die Seitenwand (3) von der Rückwand (4) trennt;
- K ein Parameter zwischen 2 und 5 ist;
- D7 der Abstand zwischen dem Mittelpunkt der Einlassöffnung (6) der Leitung in der untersten Position und der Unterkante der Seitenwand (3) ist;
- L ein Parameter kleiner oder gleich 2 ist;
- D8 der Abstand zwischen dem Mittelpunkt der Auslassöffnung (7) der Leitung in der untersten Position und der Unterkante der Rückwand (4) ist;
- J ein Parameter kleiner oder gleich 2 ist.

14. Bodenfahrzeug, umfassend mindestens eine aerodynamische Vorrichtung (1) zum Reduzieren des Luftwiderstands nach einem der vorstehenden Ansprüche.

15. Bodenfahrzeug nach dem vorstehenden Anspruch, wobei die mindestens eine aerodynamische Vorrichtung (1) in einem Rücklicht oder in einer hinteren Stoßstange des Bodenfahrzeugs integriert ist.

**Revendications**

1. Dispositif aérodynamique (1) permettant de réduire la traînée de véhicules terrestres, comprenant :

   - un corps principal (2) ayant au moins une paroi latérale (3) et une paroi arrière (4) ;
   - au moins un conduit (5) ayant une ouverture d'entrée (6) formée au niveau de la paroi latérale (3) et une ouverture de sortie (7) formée au niveau de la paroi arrière (4), dans lequel l'ouverture d'entrée (6) et l'ouverture de sortie (7) présentent un contour curviligne continu dépourvu de points de discontinuité, et dans lequel le conduit (5) présente un axe de développement longitudinal (L) formant, entre l'ouverture d'entrée (6) et l'ouverture de sortie (7), un arc dépourvu de points de discontinuité,

   dans lequel le conduit (5) est défini par les relations suivantes :

   -

   $$R2 = B*R1$$

   -

   $$R3 = A*R1$$

   -

   $$R4 = C*R1$$

   où :

   - R1 est la moitié de la taille maximale du contour de l'ouverture de sortie (7) ;
   - R2 est la moitié de la taille maximale du contour de l'ouverture d'entrée (6) ;
   - R3 est le rayon de courbure de la projection d'un premier côté du conduit (5) sur un plan sur lequel se trouve l'ouverture de sortie (7) ;
   - R4 est le rayon de courbure de la projection d'un deuxième côté du conduit (5) opposé au premier côté sur le plan sur lequel se trouve l'ouverture de sortie (7) ;
   - B est un paramètre compris entre 0,5 et 2 ;
   - A est un paramètre compris entre 2 et 6,5 ;
   - C est un paramètre compris entre 2 et 6,5.

2. Dispositif aérodynamique (1) selon la revendication 1, dans lequel le paramètre B est compris entre 0,625 et 2, de préférence est compris entre 1 et 2, encore plus préférablement est compris entre 1 et 1,6, par exemple est égal à 1,6, et/ou dans lequel les paramètres A et C sont égaux l'un à l'autre.

3. Dispositif aérodynamique (1) selon la revendication 1 ou 2, dans lequel lesdites projections des premier et deuxième côtés du conduit (5) sur le plan sur lequel se trouve l'ouverture de sortie (7) forment des arcs concaves ayant un rayon constant ou variable.

4. Dispositif aérodynamique (1) selon l'une quelconque des revendications précédentes, dans lequel le conduit (5) est en outre défini par au moins l'une des relations suivantes :

   -

   $$L1 = F*R1$$

   -

   $$D1 = D*R1$$

   où :

- L1 est une première largeur de la projection du conduit sur le plan sur lequel se trouve l'ouverture de sortie (7) ;
- D1 est la distance entre le centre de l'ouverture de sortie (7) et le plan sur lequel se trouve l'ouverture d'entrée (6) ;
- F est un paramètre compris entre 3 et 6 ;
- D est un paramètre compris entre 1,5 et 5,

et/ou dans lequel le conduit (5) est en outre défini par au moins l'une des relations suivantes :

-

$$R5 = O*R1$$

-

$$R6 = P*R1$$

où :

- R5 est l'arc de courbure de la projection radialement intérieure du conduit (5) sur un plan sur lequel se trouve l'axe de développement longitudinal (L) du conduit (5) ;
- R6 est l'arc de courbure de la projection radialement extérieure du conduit (5) sur le plan sur lequel se trouve l'axe de développement longitudinal (L) du conduit (5) ;
- O est un paramètre compris entre 1,5 et 4 ;
- P est un paramètre compris entre 4,5 et 7,

et/ou dans lequel le conduit (5) est en outre défini par au moins l'une des relations suivantes :

-

$$R7 = H*R1$$

-

$$R8 = Q*R1$$

où :

- R7 est le rayon de courbure de la projection d'un troisième côté du conduit (5) sur un plan sur lequel se trouve l'ouverture d'entrée (6) ;
- R8 est le rayon de courbure de la projection d'un quatrième côté du conduit (5) opposé au troisième côté sur le plan sur lequel se trouve l'ouverture d'entrée (6) ;
- H est un paramètre compris entre 2,5 et 8,5 ;
- Q est un paramètre compris entre 2,5 et 8,5,

dans lequel les paramètres H et Q sont de préférence égaux l'un à l'autre.

5. Dispositif aérodynamique (1) selon la revendication précédente, dans lequel lesdites projections des troisième et quatrième côtés du conduit (5) sur le plan sur lequel se trouve l'ouverture d'entrée (6), forment des arcs concaves ayant un rayon constant ou variable.

6. Dispositif aérodynamique (1) selon l'une quelconque des revendications précédentes, dans lequel le conduit (5) est en outre défini par au moins l'une des relations suivantes :

-

$$L2 = G*R1$$

-

$$D2 = E*R1$$

où :

- L2 est une seconde largeur de la projection du conduit sur le plan sur lequel se trouve l'ouverture d'entrée (6) ;
- D2 est la distance entre le centre de l'ouverture d'entrée (6) et le plan sur lequel se trouve l'ouverture de sortie (7) ;
- G est un paramètre compris entre 4,1 et 5,6 ;
- E est un paramètre compris entre 3 et 4.

7. Dispositif aérodynamique (1) selon l'une quelconque des revendications précédentes, dans lequel l'ouverture d'entrée (6) affleure la paroi latérale (3) et/ou l'ouverture de sortie (7) affleure la paroi arrière (4).

8. Dispositif aérodynamique (1) selon l'une quelconque des revendications précédentes, dans lequel l'ouverture d'entrée (6) et l'ouverture de sortie (7) du même conduit (5) présentent des contours ayant la même forme, et/ou ont un contour généralement convexe ayant un rayon de courbure constant ou variable, et/ou ont un contour de forme circulaire, ou une forme elliptique ou sensiblement elliptique ayant un axe le plus long non horizontal de l'ellipse.

9. Dispositif aérodynamique (1) selon l'une quelconque des revendications précédentes, dans lequel l'ouverture d'entrée (6) et l'ouverture de sortie (7) se trouvent sur des plans orientés transversalement l'un par rapport à l'autre.

10. Dispositif aérodynamique (1) selon l'une quelconque des revendications précédentes, dans lequel la surface de l'ouverture d'entrée (6) est supérieure à la surface de l'ouverture de sortie (7), ou la surface de l'ouverture d'entrée (6) est inférieure à la surface de l'ouverture de sortie (7).

11. Dispositif aérodynamique (1) selon l'une quelconque des revendications précédentes, dans lequel l'axe de développement longitudinal (L) du conduit (5) est dépourvu d'inflexions.

12. Dispositif aérodynamique (1) selon l'une quelconque des revendications précédentes, dans lequel le conduit (5) comprend un premier segment (8) reliant l'ouverture d'entrée (6) à une section intermédiaire (10) du conduit, et un second segment (9) reliant ladite section intermédiaire (10) à l'ouverture de sortie (7), dans lequel la section intermédiaire (10) correspond à la section transversale du conduit ayant la surface minimale ou maximale.

13. Dispositif aérodynamique (1) selon l'une quelconque des revendications précédentes, comprenant une pluralité de conduits alignés superposés (5), dans lequel la position de ladite pluralité de conduits superposés (5) dans le corps principal (2) est définie par une ou plusieurs des relations suivantes :

-

$$D3 = N*R1$$

-

$$D4 = I*R1$$

-

$$D5 = M*R1$$

-

$$D6 = K*R1$$

-

$$D7 = L*R1$$

-

$$D8 = J*R1$$

où :

- D3 est la distance entre les centres des ouvertures d'entrée (6) de deux conduits suivants ;
- N est un paramètre inférieur ou égal à 4 ;
- D4 est la distance entre les centres des ouvertures de sortie (7) de deux conduits suivants ;
- I est un paramètre inférieur ou égal à 4 ;
- D5 est la distance entre le centre de l'ouverture d'entrée (6) d'un conduit et le bord séparant la paroi latérale (3) et la paroi arrière (4) du corps principal (2) ;
- M est un paramètre compris entre 3 et 4 ;
- D6 est la distance entre le centre de l'ouverture de sortie (7) d'un conduit et le bord séparant la paroi latérale (3) et la paroi arrière (4) ;
- K est un paramètre compris entre 2 et 5 ;
- D7 est la distance entre le centre de l'ouverture d'entrée (6) du conduit dans la position la plus basse et le bord inférieur de la paroi latérale (3) ;
- L est un paramètre inférieur ou égal à 2 ;
- D8 est la distance entre le centre de l'ouverture de sortie (7) du conduit dans la position la plus basse et le bord inférieur de la paroi arrière (4) ;
- J est un paramètre inférieur ou égal à 2.

14. Véhicule terrestre comprenant au moins un dispositif aérodynamique (1) permettant de réduire la traînée selon l'une quelconque des revendications précédentes.

15. Véhicule terrestre selon la revendication précédente, dans lequel ledit au moins un dispositif aérodynamique (1) est incorporé dans un feu arrière ou dans un pare-chocs arrière dudit véhicule terrestre.

**FIG. 1**

**FIG. 2a**

**FIG. 2b**

**FIG. 2c**

**FIG. 2d**

## FIG. 3

## FIG. 4

**FIG. 5**

**FIG. 6**

**FIG. 7a**

**FIG. 7b**

**FIG. 8a**

**FIG. 8b**

**FIG. 9a**

**FIG. 9b**

**FIG. 9c**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016083997 A
- CA 2698896 A1